# EUROPÄISCHE PATENTSCHRIFT

(11) **EP 1 033 032 B1**
(45) Veröffentlichungstag und Bekanntmachung des Hinweises auf die Patenterteilung: **07.05.2003**
(21) Anmeldenummer: 98963477.9
(22) Anmeldetag: 17.11.1998
(51) Int. Cl.: H04N 1/60

(54) **VORRICHTUNG UND VERFAHREN ZUM ERZEUGEN VON BILDVERÄNDERUNGSWERTEN**
DEVICE AND METHOD FOR PRODUCING IMAGE MODIFICATION VALUES
DISPOSITIF ET PROCEDE POUR PRODUIRE DES VALEURS DE MODIFICATIONS D'IMAGE

(30) Priorität: 20.11.1997 DE 19751464
(43) Veröffentlichungstag der Anmeldung: 06.09.2000
(73) Patentinhaber: Agfa-Gevaert Aktiengesellschaft, 51373 Leverkusen (DE)
(72) Erfinder: MÄNDL, Matthias, D-92260 Ammerthal (DE); LORENZ, Bernhard, D-85417 Marzling (DE); FÜSSEL, Markus, D-81373 München (DE); KEUPP, Wolfgang, D-81549 München (DE); FINDEIS, Günter, D-82054 Sauerlach (DE); FÜRSICH, Manfred, D-82024 Taufkirchen (DE)
(86) Internationale Anmeldenummer: EP9807386
(87) Internationale Veröffentlichungsnummer: WO99027707

(56) Entgegenhaltungen:
- EP-A- 0 400 991
- EP-A- 0 817 470
- WO-A-91/15078
- DE-A- 4 002 298

## Beschreibung

Die vorliegende Erfindung betrifft eine Vorrichtung und ein Verfahren zum Erzeugen von Bildveränderungswerten für ein Kopieren eines mit einer digitalen Kamera aufgenommenen Bildes auf Kopiermaterial.

Es ist eine Vielzahl von digitalen Kameras bekannt und im Handel erhältlich, die aus unterschiedlichen Komponenten aufgebaut sind. Die verschiedenen digitalen Kameras beinhalten insbesondere unterschiedliche Bildaufnahmesensoren, die Licht in elektronische Signale wandeln. Diese Bildaufnahmesensoren weisen unterschiedliche Charakteristiken auf. Insbesondere besitzen sie eine unterschiedliche spektrale Sensibilisierung. Dementsprechend sind die Farb- und Dichtedarstellungen der von den verschiedenen digitalen Kameras aufgenommenen Bilder unterschiedlich.

Die von den digitalen Kameras aufgenommenen Bilder werden von den Bildaufnahmesensoren in digitale Bilddaten gewandelt, die auf einem Speichermittel abgelegt werden. Ein solches Speichermittel kann beispielsweise eine Chipkarte sein.

Als Bildaufnahmesensoren werden in den digitalen Kameras sogenannte CCD(Charge Coupled Device)-Bildsensoren verwendet.

Es ist beabsichtigt, die von der digitalen Kamera erzeugten Bilddaten, die die aufgenommenen Bilder repräsentieren, einer Vorrichtung zur Erzeugung von Kopien von diesen aufgenommenen Bildern zuzuleiten. Eine solche Vorrichtung zur Erzeugung von Kopien kann beispielsweise ein sogenannter Fotoprinter, ein sogenanntes Minilab oder ein Drucker sein, der von einem Rechner angesteuert wird. Die Vorrichtung zum Kopieren erzeugt von den aufgenommenen Bildern Kopien auf Fotopapier bzw. Druckerpapier oder anderen Kopiermaterialien. Der Begriff Kopieren ist daher in diesem Sinne als allgemeiner Begriff für ein Reproduzieren der aufgenommenen Bilder auf irgendeinem Kopiermaterial zu betrachten.

Aufgrund der unterschiedlichen Charakteristiken der in den diversen digitalen Kameras verwendeten Komponenten, insbesondere der Bildaufnahmesensoren, kann es bei der Wiedergabe der aufgenommenen Bilder beim Kopieren auf Fotopapier oder andere Kopiermaterialien zu unerwünschten Farb- und Dichteverzerrungen kommen. Ein von unterschiedlichen digitalen Kameras aufgenommenes Objekt kann daher auf den Kopien auf unterschiedliche Weise dargestellt sein.

Aus der EP-A-0 400 991 ist eine digitale Kopiervorrichtung bekannt, die eine Farbbalance korrektur mittels eines Mittel wertes von Kopien vornimmt.

Aufgabe der vorliegenden Erfindung ist es, eine exakte und naturgetreue Wiedergabe von mit einer digitalen Kamera aufgenommenen Bildern auf Kopiermaterialien zu ermöglichen.

Diese Aufgabe wird erfindungsgemäß durch die technische Lehren der Ansprüche 1 oder 13 gelöst.

Erfindungsgemäß werden die Bilddaten mehrerer von der digitalen Kamera aufgenommenen Bilder ausgewertet. Diese Auswertung kann nach vorgegebenen Kriterien, wie beispielsweise Farb- und/oder Dichtecharakteristiken, erfolgen. Mittels der Auswertung der Bilddaten mehrerer aufgenommener Bilder ist es möglich, die individuellen Eigenschaften und/oder Empfindlichkeiten der digitalen Kamera in Farbe und/oder Dichte zu bestimmen. Anschließend können die Bildveränderungswerte in Abhängigkeit von der Auswertung der Bilddaten der mehreren aufgenommenen Bilder erzeugt werden. Mit diesen Bildveränderungswerten kann vorteilhafterweise bei dem Kopieren eines aufgenommenen Bildes auf Kopiermaterial auf die besonderen individuellen Empfindlichkeiten der digitalen Kamera oder einer anderen Einrichtung, die an der Übertragung der Bilddaten zu der Vorrichtung zum Kopieren beteiligt ist, wie beispielsweise einer Chipkarte, eingegangen werden. Die Bildveränderungswerte können beispielsweise charakteristische Vorgaben für eine Farb- und/oder Dichteeinstellung, für die Gradation und/oder die Bildmanipulation sein, wie sie beispielsweise mit einer Farbtransformationstabelle, einer sogenannten 3D-Lookup-Tabelle, in einer Belichtungsstation, die das eigentliche Kopieren des aufgenommenen Bildes auf Kopiermaterial durchführt, vorgenommen wird. Dabei ist allerdings zu berücksichtigen, ob es sich beispielsweise um gewollte Farbdominaten oder unerwünschte farbliche Übergewichte, wie Farbstiche, handelt. Aufgrund der Erfindung ist es insbesondere auch möglich, charakteristische Farbsättigungen auszugleichen.

Durch die Erfindung wird vorteilhafterweise gewährleistet, daß nicht nur die Auswertung der Bilddaten eines einzigen aufgenommenen Bildes für die Einstellung von Parametern für das Kopieren des aufgenommenen Bildes auf Kopiermaterial verwendet wird. Vielmehr werden hier die Bilddaten mehrerer Bilder ausgewertet.

Auf diese Weise können Eigenschaften der digitalen Kamera oder der anderen beteiligten Einrichtungen ausfindig gemacht werden, da sich diese Eigenschaften in den Bilddaten eines jeden ausgewerteten Datensatzes niederschlagen müssen. Aufgrund der Erfindung ist es beispielsweise möglich, die im Laufe der Benutzung der digitalen Kamera auftretenden Alterungserscheinungen - insbesondere der Bildaufnahmesensoren - zumindest teilweise auszugleichen.

Vorteilhafterweise werden die Bilddaten aller mit der digitalen Kamera aufgenommenen Bilder, die von dem Abspeichermittel abgespeichert wurden, ausgewertet. Dadurch können die Bildveränderungswerte auf besonders exakte Weise erzeugt werden.

Die erfindungsgemäße Vorrichtung kann vorteilhafterweise eine Vorrichtung zum Kopieren von Bildern auf Kopiermaterial, beispielsweise ein sogenannter Fotoprinter, sein. Die erfindungsgemäße Vorrichtung kann aber ebenso die digitale Kamera selbst sein. Darüber hinaus ist es auch möglich, daß sie ein Speichermittel ist, das für das Abspeichem der digitalen Bilddaten der aufgenommenen Bilder verwendet wird. Ein solches Speichermittel kann vorteilhafterweise eine Chipkarte sein.

In einer besonders vorteilhaften Ausgestaltung der Erfindung werden die erzeugten Bildveränderungswerte einem Datensatz, in dem eines der aufgenommenen Bilder zusammengefaßt ist, hinzugefügt. Auf diese Weise erfolgt eine direkte Zuordnung von Bilddaten und Bildveränderungswerten, was insbesondere deshalb vorteilhaft ist, weil eine einmalige Auswertung der Bilddaten für die Erzeugung der Bildveränderungswerte ausreichend ist. Bei jedem Kopieren des aufgenommenen Bildes kann daher von der jeweiligen Vorrichtung zum Kopieren der Bilder auf Kopiermaterial auf die dem jeweiligen Datensatz hinzugefügten Bildveränderungswerte zugegriffen werden. Darüber hinaus kann vorteilhafterweise eine exakte und naturgetreue Wiedergabe des aufgenommenen Bildes auch dann erfolgen, wenn nur ein einziges Bild in die Vorrichtung zum Kopieren des Bildes auf Kopiermaterial eingegeben wird oder wenn zusammengehörige Bilder, die von der gleichen digitalen Kamera aufgenommen wurden, nicht mehr als solche zusammengehörige Bilder erkannt werden können. Die Auswertung der Bilddaten der mehreren aufgenommenen Bilder der digitalen Kamera wurde einmalig von der erfindungsgemäßen Vorrichtung ausgeführt und den abgespeicherten Datensätzen mit den Bilddaten der aufgenommenen Bilder hinzugefügt, so daß auf sie jederzeit zugegriffen werden kann.

In einer weiteren, besonders vorteilhaften Ausgestaltung der Erfindung, in der die erfindungsgemäße Vorrichtung eine Vorrichtung zum Kopieren von Bildern auf Kopiermaterial ist, sind in einem Speicher Grunddatensätze abgespeichert, die Grundparameter für das Kopieren der Bilder enthalten. Solche Grundparameter können beispielsweise Angaben für die einzustellenden Farben und/oder Dichten sein. Den Grunddatensätzen sind vorgegebene Typen von digitalen Kameras zugeordnet. Die Vorrichtung ist in der Lage, aus den Daten, die ihr für die Erfüllung des Auftrags zum Kopieren des Bildes übermittelt werden, den Typ der digitalen Kamera zu erkennen, die das zu kopierende Bild aufgenommen hat. In Abhängigkeit von dem erkannten Typ der digitalen Kamera kann somit der ihr zugeordnete Grunddatensatz ausgewählt werden. Die in dem ausgewählten Grunddatensatz enthaltenen Grundparameter können anschließend für die Erzeugung der Bildveränderungswerte verwendet werden. Auf diese Weise ist es möglich, die Wiedergabe der aufgenommenen Bilder auf Kopiermaterialien weiter zu verbessern. Mittels der Grundparameter des ausgewählten Grunddatensatzes ist zunächst ein Voreinstellen der Vorrichtung zum Kopieren der Bilder möglich. Mittels der Auswertung der Bilddaten mehrerer Bilder erfolgt eine Feineinstellung der Vorrichtung zum Kopieren der Bilder.

Einfachheitshalber kann der erfindungsgemäßen Vorrichtung eine Information mit der Angabe des Typs der digitalen Kamera zugeleitet werden, die das zu entwickelnde Bild aufgenommen hat. Diese Information wird von der erfindungsgemäßen Vorrichtung empfangen. Mittels dieser Information kann die erfindungsgemäße Vorrichtung direkt auf den entsprechenden Grunddatensatz zugreifen. Bei dieser Ausgestaltung des Erkennungsmittels ist es allerdings vorteilhaft, wenn die Information mit der Angabe des Typs der digitalen Kamera eindeutig spezifiziert ist. Ist dies nicht der Fall, so kann das Erkennungsmittel auch so ausgestaltet sein, daß es die Bilddaten wenigstens eines der aufgenommenen Bilder auswertet. Um dabei den Typ der digitalen Kamera zu erkennen, mit der das zu kopierende Bild aufgenommen wurde, kann es bereits ausreichend sein, die Bilddaten eines einzigen Bildes auszuwerten. Die Auswertung der Bilddaten kann dabei auf das Erkennen der Auflösung oder der Farbentiefe der aufgenommenen Bilder oder die Formatierungs- oder Komprimierungsart des Datensatzes beschränkt sein. Eine vollständige Auswertung der Bilddaten, wie sie für die Erzeugung der Bildveränderungswerte notwendig wäre, ist in diesem Fall nicht erforderlich. Der Typ der digitalen Kamera kann auf diese Weise auch ohne vorgegebene Spezifikation schnell und eindeutig identifiziert werden.

Weitere vorteilhafte Ausgestaltungen der Erfindung sind den abhängigen Ansprüchen zu entnehmen.

Im folgenden werden die Erfindung und ihre Vorteile anhand von Ausführungsbeispielen und den Zeichnungen beschrieben.

Es zeigen:
- Fig. 1: ein erstes Ausführungsbeispiel einer erfindungsgemäßen Vorrichtung als Vorrichtung zum Kopieren von Bildern auf Kopiermaterial,
- Fig. 2: ein Beispiel eines Ablaufdiagramms zur Bestimmung von Bildveränderungswerten,
- Fig. 3: ein zweites Ausführungsbeispiel einer erfndungsgemäßen Vorrichtung als digitale Kamera,
- Fig. 4: ein drittes Ausführungsbeispiel einer erfindungsgemäßen Vorrichtung als Chipkarte.

Im folgenden werden für gleiche oder gleich wirkende Elemente der Ausführungsbeispiele durchweg gleiche Bezugszeichen verwendet.

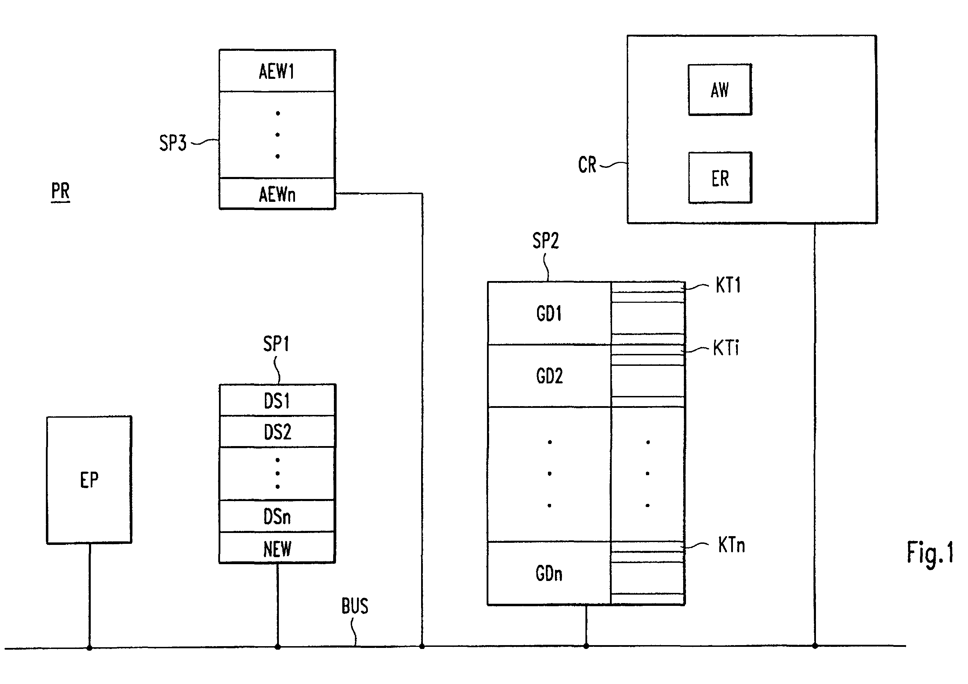

Fig. 1 zeigt ein erstes Ausführungsbeispiel einer erfindungsgemäßen Vorrichtung. Diese ist hier in eine Vorrichtung zum Kopieren von Bildern auf Kopiermaterial integriert, die hier ein sogenannter Fotoprinter PR ist. Die Fig. 1 zeigt einen Teil des Printers PR. Der Printer PR weist ein Steuermittel CR für die Steuerung der von dem Printer PR ausführbaren Funktionen auf. In einem ersten Speicher SP1 ist eine Vielzahl von Datensätzen DS1 bis DSn abgespeichert. Diese Datensätze DS1 bis DSn beinhalten Bilddaten, die von einer digitalen Kamera beim Aufnehmen von Bildern erzeugt wurden. Jeder der Datensätze DS1 bis DSn beinhaltet die Bilddaten eines der aufgenommenen Bilder. Der Printer PR weist ein Empfangsmittel EP auf, mit dem beliebige Daten und/oder Signale empfangen werden können. Über dieses Empfangsmittel EP wurden beispielsweise die in den Datensätzen DS1 bis DSn abgespeicherten Bilddaten empfangen. Das Empfangsmittel EP ist als Lesemittel für Speicher, wie z.B. Chipkarten, ausgestaltet.

Das Steuermittel CR ist so ausgestaltet, daß es ein Auswertemittel AW aufweist, mit dem Bilddaten der Datensätze DS1 bis DSn, die in dem ersten Speicher SP1 abgespeichert sind, ausgewertet werden können. Diese Auswertung der Bilddaten erfolgt nach vorgegebenen Kriterien. Solche vorgegebenen Kriterien können beispielsweise die Analyse der Farb- und/oder Dichtecharakteristiken der in dem ersten Speicher SP1 abgespeicherten Bilddaten der aufgenommenen Bilder betreffen. Das Auswertemittel AW wertet dabei die Bilddaten mehrerer der Datensätze DS1 bis DSn aus. Vorteilhafterweise wertet das Auswertemittel AW die Bilddaten aller Datensätze aus, die von der gleichen digitalen Kamera erzeugt wurden. Auf diese Weise können die für die digitale Kamera spezifischen Charakteristiken betreffend die Erzeugung von Farb- und/oder Dichtewerten festgestellt werden. Diese speziellen Charakteristiken der digitalen Kamera können beispielsweise Farbverzerrungen erzeugen, so daß bei dem Kopieren auf Kopiermaterial, wie z. B. Fotopapier, ein farbstichiges oder farbgesättigtes Bild dargestellt würde.

Um dies zu vermeiden, weist das Steuermittel CR ein Erzeugungsmittel ER auf, mit dem Bildveränderungswerte NEW erzeugt werden können, mit denen das Kopieren der Bilder auf Fotopapier so gesteuert werden kann, daß eine verzerrte Wiedergabe der aufgenommenen Bildmotive aufgrund der Charakteristiken der digitalen Kamera vermieden werden kann. Durch die Erzeugung der Bildveränderungswerte NEW durch das Erzeugungsmittel ER kann daher eine Kompensation der durch die individuellen Komponenten der digitalen Kamera erzeugten Verzerrungen erfolgen.

Das Auswertemittel AW und das Erzeugungsmittel ER sind im vorliegenden Ausführungsbeispiel in das Steuermittel CR integriert. Das Steuermittel CR kann mittels eines herkömmlichen leistungsstarken Rechners realisiert werden, der auf in einem Speicher abgespeicherte Programme zugreifen kann. Bestimmte Teile dieser abgespeicherten Programme beinhalten die Vorschriften, mit denen der Rechner die Funktionen des Auswertemittels AW und des Erzeugungsmittels ER ausführen kann.

Die von dem Erzeugungsmittel ER erzeugten Bildveränderungswerte NEW werden in einem Bereich des ersten Speichers SP1 abgespeichert. Beim Kopieren der Bilder auf Fotomaterial werden daher gleichzeitig mit dem Auslesen der Bilddaten aus dem ersten Speicher SP1 die zugehörigen Bildveränderungswerte NEW ausgelesen. Das Steuermittel CR kann ebenfalls so ausgestaltet sein, daß es die erzeugten Bildveränderungswerte NEW zu den verschiedenen Datensätzen DS1 bis DSn hinzufügt.

Der Printer PR weist einen zweiten Speicher SP2 auf, in dem verschiedene Grunddatensätze GD1 bis GDn abgespeichert sind. In diesen Grunddatensätzen GD1 bis GDn sind Grundparameter für das Kopieren der Bilder auf Fotopapier abgelegt. Diese Grundparameter enthalten insbesondere Angaben für die Farb- und/oder Dichteeinstellung der Einrichtungen, die das Kopieren des Bildes ausführen. Die Grunddatensätze GD1 bis GDn sind verschiedenen Kameratypen KT1 bis KTn zugeordnet. Der Begriff Kameratyp bezieht sich hier auf die technische Ausführung und die physikalische Zusammensetzung der jeweiligen digitalen Kamera. Im vorliegenden Ausführungsbeispiel gemäß der Fig. 1 ist beispielsweise dem Grunddatensatz GD1 der Kameratyp KT1, dem Grunddatensatz GD2 der Kameratyp KTi und dem Grunddatensatz GDn der Kameratyp KTn zugeordnet. Die in den verschiedenen Grunddatensätzen GD1 bis GDn enthaltenen Grundparameter sind speziell an die ihnen zugeordneten Kameratypen angepaßt. Mit den Grundparametern werden bereits bekannte Charakteristiken der verschiedenen Kameratypen berücksichtigt. Die Grunddatensätze GD1 bis GDn werden vorteilhafterweise für das Kopieren der Bilder fest vorgegeben und während des Betriebs der erfindungsgemäßen Vorrichtung nicht verändert.

Über das Empfangsmittel EP können Informationen mit Angaben über den Typ der digitalen Kamera, mit der ein zu kopierendes Bild aufgenommen wurde, empfangen werden. Diese Information mit der Angabe des Kameratyps ist vorteilhafterweise bereits in dem Datensatz DS1 bis DSn mit den Bilddaten des zu kopierenden Bildes enthalten. Die Information mit der Angabe des Kameratyps kann daher durch das Steuermittel CR erfaßt und der in dem zweiten Speicher SP2 abgespeicherte entsprechende Grunddatensatz ausgewählt werden. Die in dem ausgewählten Grunddatensatz enthaltenen Grundparameter werden daraufhin von dem Erzeugungsmittel ER für die Erzeugung der Bildveränderungswerte NEW verwendet.

Wird dem Printer PR eine solche explizite Information mit der Angabe des Kameratyps nicht übermittelt, so ist es möglich, einen der in dem ersten Speicher SP1 abgespeicherten Datensätze DS1 bis DSn auszuwerten, um mittels der in diesem Datensatz abgespeicherten Bilddaten den Kameratyp, der das zugehörige Bild aufgenommen hat, zu erkennen. Jede digitale Kamera hat bestimmte Charakteristiken betreffend die Auflösung oder die Farbtiefe der mit ihr aufgenommenen Bilder. Darüber hinaus hat sie eine besondere Art der Formatierung und Komprimierung der von ihr erzeugten Bilddaten. Für die Bestimmung des Kameratyps ist es daher ausreichend, beispielsweise das Format der Bilddaten des zu kopierenden Bildes auszuwerten. Der eigentliche Inhalt des zu kopierenden Bildes muß dabei nicht ausgewertet werden. Um die Sicherheit für die Bestimmung des Kameratyps zu erhöhen, ist es ebenfalls möglich, mehrere Datensätze bezüglich ihres Formats auszuwerten.

Der erfindungsgemäße Printer PR gemäß der Fig. 1 weist einen dritten Speicher SP3 auf. Dieser dritte Speicher SP3 kann zusammen mit dem ersten und zweiten Speicher SP1 und SP2 in einem einzigen Speicher realisiert werden. In dem dritten Speicher SP3 sind alte Bildveränderungswerte AEW1 bis AEWn abgelegt. Die alten Bildveränderungswerte AEW1 bis AEWn sind dabei nach Kameratypen kategorisiert. Alternativ können sie beispielsweise nach Bildaufnahmensensoren kategorisiert sein. Die alten Bildveränderungswerte AEW1 bis AEWn wurden bei früheren Auswertungen von Bilddaten erzeugt und können nun für die Erzeugung der aktuellen Bildveränderungswerte durch das Erzeugungsmittel ER verwendet werden. Nach der Bestimmung des jeweiligen Kameratyps durch das Steuermittel CR kann daher auf die zugehörigen alten Bildveränderungswerte zugegriffen werden. Durch die Berücksichtigung der alten Bildveränderungswerte beim Kopieren des Bildes kann eine weitere Verbesserung der exakten und naturgetreuen Wiedergabe des aufgenommenen Bildes ermöglicht werden.

Vorteilhafterweise werden die verschiedenen alten Bildveränderungswerte AEW1 bis AEWn , die der gleichen digitalen Kamera zugeordnet sind, in Abhängigkeit von dem Zeitpunkt ihres Erzeugens unterschiedlich stark gewichtet. Dadurch ist es möglich, alte Bildveränderungswerte, die neueren Ursprungs sind, stärker bei der Erzeugung des aktuellen Bildveränderungswertes NEW zu berücksichtigen.

Alternativ zum Abspeichern eines jeden alten Bildveränderungswertes AEW1 bis AEWn kann ein Korrekturwert erzeugt werden, in dem alte Bildveränderungswerte für einen Kameratyp zusammengefaßt sind. Diese Zusammenfassung der alten Bildveränderungswerte kann mittels einer vorgegebenen Verknüpfung, die ebenfalls unterschiedliche Wichtungen der verschiedenen alten Bildveränderungswerte in Abhängigkeit von dem Zeitpunkt ihres Erzeugens vorsieht, erfolgen. Auf diese Weise kann die Erzeugung der aktuellen Bildveränderungswerte NEW vereinfacht und beschleunigt werden, da von dem Erzeugungsmittel ER nunmehr nur ein einziger Korrekturwert berichtigt werden muß.

Für die Übertragung von Daten innerhalb der erfindungsgemäßen Vorrichtung weist diese einen Bus BUS auf, an den ihre Komponenten über bidirektionale Datenübertragungsleitungen angeschlossen sind.

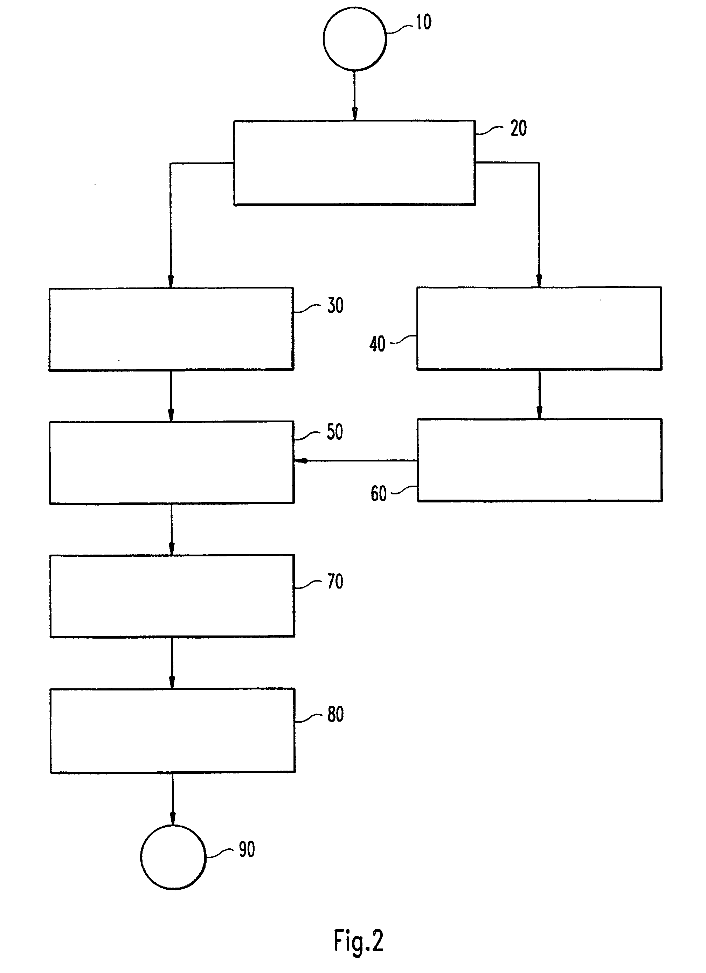

Fig. 2 zeigt ein Ablaufdiagramm zur Bestimmung der Bildveränderungswerte NEW, wie es von dem Steuermittel CR des Printers PR gemäß der Fig. 1 ausgeführt werden kann. In einem Schritt 10 wird mit dem Verfahren zur Bestimmung der Bildveränderungswerte NEW begonnen. In einem Schritt 20 werden von dem Empfangsmittel EP die Bilddaten der zu kopierenden Bilder, die mit der gleichen digitalen Kamera aufgenommen werden, von einer Chipkarte ausgelesen. Die Bilddaten eines jeden Bildes sind in Form von Datensätzen in dem ersten Speicher SP1 abgespeichert. Die Datensätze enthalten für jeden Punkt des aufgenommenen Bildes Bilddaten R, B und G für die drei Grundfarben rot, grün und blau. Das Verfahren verzweigt anschließend zu einem Schritt 30, in dem für jede der drei Grundfarben rot, grün und blau eine mittlere Grundfarbe bestimmt wird. Dies erfolgt durch Aufmitteln aller Bilddaten R, B und G für die jeweilige Grundfarbe aller zu kopierenden Bilder. Parallel zu diesem Schritt 30 verzweigt das Verfahren nach dem Ausführen des Schritts 20 zu einem Schritt 40, in dem für jeden Punkt aller zu kopierenden Bilder die Summe R+B+G der Bilddaten der Grundfarben gebildet wird. Aus dieser Summe R+B+G erhält man die Dichte für jeden Punkt der zu kopierenden Bilder. Für die Bestimmung dieser Dichte kann ggf. eine Logarithmierung der Summe durchgeführt werden. Nach der Bestimmung der Dichte der Punkte wird in einem Schritt 60 für die Gesamtheit der Dichten der Punkte aller zu kopierenden Bilder ein Minimum, ein Maximum und ein Mittelwert bestimmt. Der Bereich der Dichtewerte zwischen dem Minimum und dem Maximum aller Dichten der Punkte der zu kopierenden Bilder bestimmt den Dichteumfang der zu kopierenden Bilder. Dieser Dichteumfang wird in einem Schritt 50 in äquidistante Intervalle eingeteilt. In einem Schritt 70 erfolgt daraufhin die Bestimmung der Bildveränderungswerte NEW, indem für jedes dieser äquidistanten Dichteintervalle eine mittlere Grundfarbe für jede der Grundfarben rot, grün und blau bestimmt wird. Diese Bestimmung der mittleren Grundfarben in jedem Dichteintervall erfolgt durch Aufmitteln der Bilddaten der Grundfarben rot, grün und blau für diejenigen Bildpunkte, deren Dichte im entsprechenden Dichteintervall liegt. Diese mittleren Grundfarben für jedes Dichteintervall entsprechen im vorliegenden Ausführungsbeispiel den Bildveränderungswerten NEW. Diese ermittelten Bildveränderungswerte NEW werden anschließend in einem Schritt 80 in dem ersten Speicher SP1 abgelegt. In einem Schritt 90 ist daraufhin das Verfahren zur Bestimmung der Bildveränderungswerte NEW gemäß dem vorliegenden Ausführungsbeispiel beendet.

Die auf die obige Weise bestimmten Bildveränderungswerte NEW, die für die digitale Kamera spezifisch sind, werden anschließend von dem Steuermittel CR dafür verwendet, bildspezifische Farbkopierwerte für das Kopieren des jeweiligen Bildes auf Kopiermaterial zu bestimmen. Die einzelnen Farbkopierwerte werden daraufhin zu einer nicht dargestellten Kopiereinrichtung übermittelt, die auf deren Grundlage eine Kopie des aufgenommenen Bildes auf Kopiermaterial erzeugt. Die Bestimmung der einzelnen Farbkopierwerte für jedes zu kopierende Bild ist nicht erfindungswesentlich und kann beispielsweise mit einem Verfahren erfolgen, wie es in der deutschen Patentschrift DE-PS 28 40 287 zum Bestimmen von Farbkopierwerten für ein Kopieren von fotografischen Filmvorlagen auf Fotopapier offenbart ist.

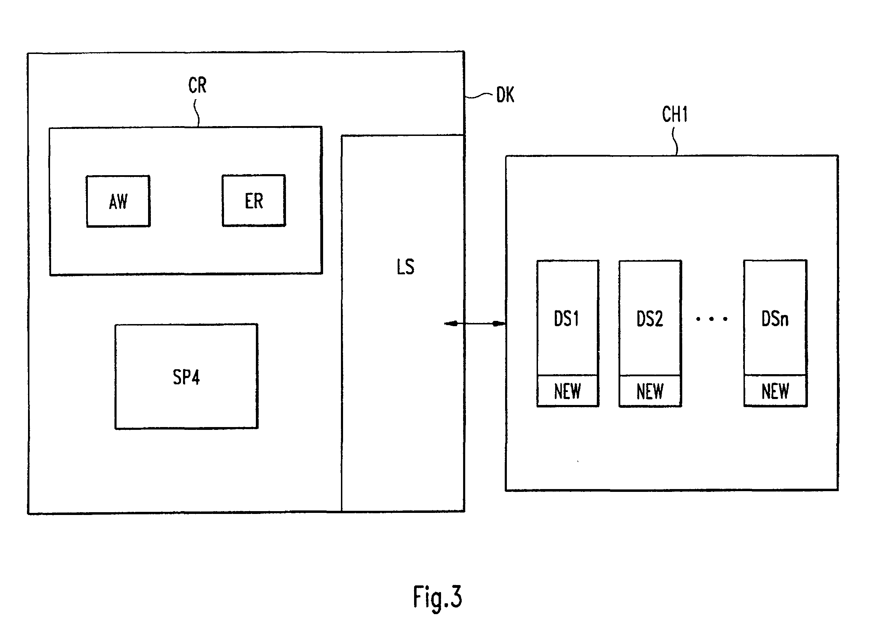

Fig. 3 zeigt ein zweites Ausführungsbeispiel der erfindungsgemäßen Vorrichtung in Form einer digitalen Kamera DK. Diese digitale Kamera DK weist eine Lese- und Schreibeinrichtung LS für das Lesen und Beschreiben eines Speichermittels, insbesondere einer Chipkarte, auf. Fig. 3 zeigt eine solche Chipkarte CH1. Diese Chipkarte CH1 wird üblicherweise für den Betrieb der digitalen Kamera DK in die Lese- und Schreibeinrichtung LS hineingeschoben. Die Lese- und Schreibeinrichtung LS stellt daher gleichzeitig eine Aufnahmeeinrichtung für die Aufnahme der Chipkarte dar. Die Fig. 3 zeigt das Steuermittel CR der digitalen Kamera DK, das das Auswertemittel AW zum Auswerten der von der digitalen Kamera DK erzeugten Bilddaten bei der Aufnahme eines Bildes und das Erzeugungsmittel ER zum Erzeugen der Bildveränderungswerte NEW enthält. Die bei der Aufnahme eines Bildes durch die digitale Kamera DK erzeugten Bilddaten werden mittels der Lese- und Schreibeinrichtung LS auf der Chipkarte CH1 in Form von Datensätzen DS1 bis DSn abgespeichert. In diesen Datensätzen DS1 bis DSn sind die Bilddaten der aufgenommenen Bilder enthalten. Die Bilddaten der einzelnen Datensätze DS1 bis DSn werden - wie bereits oben beschrieben - durch das Auswertemittel AW ausgewertet, so daß das Erzeugungsmittel ER die Bildveränderungswerte NEW in Abhängigkeit von der Auswertung der Bilddaten durch das Auswertemittel AW erzeugen kann. Dabei können das Auswerte- und das Erzeugungsmittel AW bzw. ER jederzeit auf die auf der Chipkarte CH1 abgespeicherten Bilddaten zugreifen, solange diese Chipkarte CH1 in der Leseund Schreibeinrichtung LS eingeschoben ist. Nach der Erzeugung der Bildveränderungswerte NEW durch das Erzeugungsmittel ER werden diese erzeugten Bildveränderungswerte NEW durch das Steuermittel CR den Datensätzen DS1 bis DSn hinzugefügt. Dadurch können die Bildveränderungswerte NEW jederzeit zusammen mit den zugehörigen Bilddaten in den Datensätzen DS1 bis DSn von der Chipkarte CH1 gelesen werden.

Die digitale Kamera DK weist einen Speicher SP4 auf, in dem ein Korrekturwert abgespeichert ist, der von dem Erzeugungsmittel ER zusätzlich zu dem Ergebnis des Auswertemittels AW für die Erzeugung der Bildveränderungswerte NEW verwendet werden kann. In diesem Korrekturwert sind alte Bildveränderungswerte für die digitale Kamera DK miteinander verknüpft, die aufgrund der Auswertung von Bilddaten früher aufgenommener Bilder erzeugt wurden. Diese alten Bildveränderungswerte können ebenfalls in Abhängigkeit von dem Zeitpunkt ihres Erzeugens unterschiedlich stark wichtbar sein, so daß ältere Bildveränderungswerte weniger stark bei der Erzeugung der Bildveränderungswerte von dem Erzeugungsmittel ER berücksichtigt werden. Der Korrekturwert wird von dem Steuermittel CR nach jedem erneuten Erzeugen von Bildveränderungswerten aktualisiert.

Es ist möglich, daß die Bildveränderungswerte NEW von dem Erzeugungsmittel ER erst dann erzeugt werden, wenn die Chipkarte CH1 aus der Lese- und Schreibvorrichtung LS herausgenommen werden soll. An der digitalen Kamera DK ist dann beispielsweise ein Signalgeber in Form eines Druckknopfes angebracht, der von einer Bedienperson zur Herausnahme der Chipkarte CH1 aus der digitalen Kamera DK gedrückt werden muß. Das Drücken des Druckknopfes bewirkt gleichzeitig eine Bestimmung der Bildveränderungswerte NEW und deren Abspeichern auf der Chipkarte CH1. Die Bildveränderungswerte NEW können allerdings ebenfalls nach jeder erneuten Aufnahme eines Bildes neu von dem Erzeugungsmittel ER erzeugt werden.

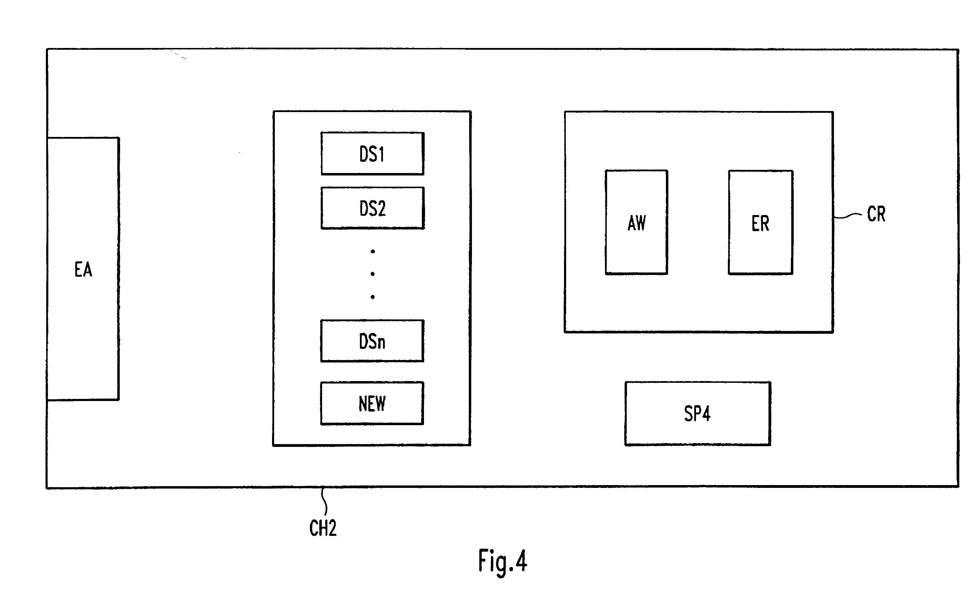

Fig. 4 zeigt ein drittes Ausführungsbeispiel der erfindungsgemäßen Vorrichtung, die hier als Chipkarte ausgestaltet ist. Fig. 4 zeigt eine "intelligente" Chipkarte CH2, die das Steuermittel CR mit dem darin integrierten Auswerte- und Erzeugungsmittel AW bzw. ER aufweist. Die Chipkarte CH2 weist ein Ein- und Ausgabemittel EA auf, mit dem auf ihr abgespeicherte Daten ein- und ausgegeben werden können. Über das Ein- und Ausgabemittel EA werden die von einer digitalen Kamera erzeugten Bilddaten eines aufgenommenen Bildes eingegeben und in dem ersten Speicher SP1 abgespeichert. Die Bilddaten der aufgenommenen Bilder sind - wie bereits oben beschrieben - in Datensätze DS1 bis DSn unterteilt. Das Steuermittel CR greift in bekannter Weise auf den ersten Speicher SP1 zu, liest die darin abgespeicherten Bilddaten aus und startet die Prozedur zur Erzeugung der Bildveränderungswerte NEW. Nach deren Erzeugung werden sie in dem ersten Speicher SP1 abgelegt. Die Chipkarte CH2 weist ebenfalls den Speicher SP4 auf, in dem der Korrekturwert mit der Verknüpfung der alten Bildveränderungswerte enthalten ist. Die "intelligente" Chipkarte CH2 ist daher in der Lage, aus der Übermittlung der Bilddaten der von der digitalen Kamera aufgenommenen Bilder die Bildveränderungswerte selbständig zu erzeugen.

## Patentansprüche

1. Vorrichtung (PR; DK; CH2) zum Erzeugen von Bildveränderungswerten (NEW) für ein Kopieren eines mit einer digitalen Kamera aufgenommenen Bildes auf Kopiermaterial, um unterschiedliche Charakteristiken von digitalen Kameras und deren Komponenten zu berücksichtigen, mit
- einem Abspeichermittel (SP1; LS) zum Abspeichern von digitalen Bilddaten mehrerer von der digitalen Kamera aufgenommener Bilder, welche unter anderem individuelle Eigenschaften und/oder Empfindlichkeiten der digitalen Kamera und deren Komponenten repräsentieren,
- einem Auswertemittel (AW) zum Auswerten der Bilddaten der mehreren Bilder anhand von charakteristischen Kriterien der Bilddaten und
- einem Erzeugungsmittel (ER) zum Erzeugen der Bildveränderungswerte (NEW) in Abhängigkeit von der Auswertung der Bilddaten der mehreren Bilder.

2. Vorrichtung nach Anspruch 1, **dadurch gekennzeichnet, daß** das Auswertemittel (AW) so ausgestaltet ist, daß es die Bilddaten aller Bilder auswertet, die auf dem Abspeichermittel (SP1; LS) abgespeichert sind und von der digitalen Kamera aufgenommen wurden.

3. Vorrichtung nach Anspruch 1 oder 2, **dadurch gekennzeichnet, daß** Bilddaten eines der von der digitalen Kamera aufgenommenen Bilder in einem Datensatz (DS1, ..., DSn) zusammengefaßt sind und die Vorrichtung ein Steuermittel (CR) zum Hinzufügen der erzeugten Bildveränderungswerte (NEW) zu dem Datensatz (DS1, ... , DSn) aufweist.

4. Vorrichtung nach einem der Ansprüche 1-3, **dadurch gekennzeichnet, daß** sie eine Vorrichtung (PR) zum Kopieren von Bildern auf Kopiermaterial ist.

5. Vorrichtung nach Anspruch 4, **dadurch gekennzeichnet, daß** sie weiterhin
- ein Erkennungsmittel (EP, CR) zum Erkennen eines Typs (KT1, ... , KTn) der digitalen Kamera, die das zu kopierende Bild aufgenommen hat,
- einen Speicher (SP2) zum Speichern von Grunddatensätzen (GD1, ... , GDn) mit Grundparametern für das Kopieren der Bilder, wobei den Grunddatensätzen (GD1, ... , GDn) Typen (KT1, ... , KTn) von digitalen Kameras zugeordnet sind, und
- ein Auswahlmittel (CR) zur Auswahl eines abgespeicherten Grunddatensatzes (GD1, ... , GDn) in Abhängigkeit von dem erkannten Typ (KT1, ... , KTn) der digitalen Kamera aufweist und
- das Erzeugungsmittel (ER) so ausgestaltet ist, daß die Bildveränderungswerte (NEW) zusätzlich mittels der Grundparameter des ausgewählten Grunddatensatzes (GD1, ... , GDn) erzeugbar sind.

6. Vorrichtung nach Anspruch 5, **dadurch gekennzeichnet, daß** das Erkennungsmittel (EP, CR) so ausgestaltet ist, daß eine Information mit der Angabe des Typs (KT1, ... , KTn) der digitalen Kamera erfaßbar ist.

7. Vorrichtung nach Anspruch 5 oder 6, **dadurch gekennzeichnet, daß** das Erkennungsmittel (EP, CR) so ausgestaltet ist, daß die Bilddaten wenigstens eines der aufgenommenen Bilder auswertbar sind.

8. Vorrichtung nach einem der Ansprüche 1-3, **dadurch gekennzeichnet, daß** sie eine digitale Kamera (DK) ist.

9. Vorrichtung nach einem der Ansprüche 1-3, **dadurch gekennzeichnet, daß** sie ein Speichermittel (CH2), insbesondere eine Chipkarte, ist.

10. Vorrichtung nach einem der Ansprüche 1-9, **dadurch gekennzeichnet, daß** in einem weiteren Speicher (SP3) alte Bildveränderungswerte (AEW1, ..., AEWn) für die digitale Kamera abspeicherbar sind, die aufgrund der Auswertung von Bilddaten früher erzeugt wurden, und das Erzeugungsmittel (ER) so ausgestaltet ist, daß die Bildveränderungswerte (NEW) zusätzlich in Abhängigkeit von den alten Bildveränderungswerten (AEW1, ... , AEWn) erzeugbar sind.

11. Vorrichtung nach Anspruch 10, **dadurch gekennzeichnet, daß** das Erzeugungsmittel (ER) so ausgestaltet ist, daß die alten Bildveränderungswerte (AEW1, ... , AEWn) für die digitale Kamera in Abhängigkeit von dem Zeitpunkt ihres Erzeugens unterschiedlich stark wichtbar sind, so daß die alten Bildveränderungswerte (AEW1, ... , AEWn) mit zunehmendem Alter weniger stark bei der Erzeugung der Bildveränderungswerte (NEW) berücksichtigt werden.

12. Vorrichtung nach einem der Ansprüche 1-9, **dadurch gekennzeichnet, daß** das Erzeugungsmittel (ER) so ausgestaltet ist, daß ein Korrekturwert erzeugbar ist, in dem alte Bildveränderungswerte für die digitale Kamera, die aufgrund der Auswertung von Bilddaten früher erzeugt wurden, miteinander verknüpft sind, und die Bildveränderungswerte (NEW) zusätzlich mittels dieses Korrekturwertes erzeugbar sind.

13. Verfahren zum Erzeugen von Bildveränderungswerten (NEW) für ein Kopieren eines mit einer digitalen Kamera aufgenommenen Bildes auf Kopiermaterial, um unterschiedliche Charakteristiken von digitalen Kameras und deren Komponenten zu berücksichtigen, wobei das Verfahren folgende Schritte aufweist:
- Abspeichern von digitalen Bilddaten mehrerer von der digitalen Kamera aufgenommener Bilder, welche unter anderem individuelle Eigenschaften und/oder Empfindlichkeiten der digitalen Kamera und deren Komponenten repräsentieren,
- Auswerten der Bilddaten der mehreren Bilder anhand von charakteristischen Kriterien der Bilddaten und
- Erzeugen der Bildveränderungswerte (NEW) in Abhängigkeit von der Auswertung der Bilddaten der mehreren Bilder.

## Claims

1. Device (PR; DK; CH2) for generating image modification values (NEW) for copying a picture taken with a digital camera onto copying material, to take into account different characteristics of digital cameras and the components thereof, comprising
- a storage medium (SP1; LS) for storing digital image data of a plurality of pictures taken by the digital camera, which data *inter alia* represents individual properties and/or sensitivities of the digital camera and the components thereof,
- an evaluation means (AW) for evaluating the image data of the plurality of pictures with the aid of characteristic criteria of the image data and
- a generating means (ER) for generating the image modification values (NEW) as a function of the evaluation of the image data of the plurality of pictures.

2. Device according to claim 1, **characterised in that** the evaluation means (AW) is configured in such a way that it evaluates the image data of all pictures stored on the storage medium (SP1; LS) and taken by the digital camera.

3. Device according to claim 1 or 2, **characterised in that** image data of one of the pictures taken by the digital camera is combined in a record (DS1, ..., DSn) and the device comprises a controller (CR) for adding the generated image modification values (NEW) to the record (DS1, ..., DSn).

4. Device according to any of claims 1 to 3, **characterised in that** it is a device (PR) for copying pictures onto copying material.

5. Device according to claim 4, **characterised in that** it also comprises
- a recognition means (EP, CR) for recognising a type (KT1, ..., KTn) of digital camera which took the picture to be copied,
- a memory (SP2) for storing basic records (GD1, ..., GDn) with basic parameters for copying the pictures, types (KT1, ..., KTn) of digital camera being associated with the basic records (GD 1, ..., GDn), and
- a selector (CR) for selecting a stored basic record (GD1, ..., GDn) as a function of the recognised type (KT1, ..., KTn) of digital camera and
- the generating means (ER) is configured in such a way that the image modification values (NEW) can also be generated by means of the basic parameters of the selected basic record (GD1, ..., GDn).

6. Device according to claim 5, **characterised in that** the recognition means (EP, CR) is configured in such a way that information can be detected by giving the type (KT1, ..., KTn) of digital camera.

7. Device according to claim 5 or 6, **characterised in that** the recognition means (EP, CR) is configured in such a way that the image data of at least one of the pictures taken can be evaluated.

8. Device according to any of claims 1 to 3, **characterised in that** it is a digital camera (DK).

9. Device according to any of claims 1 to 3, **characterised in that** it is a storage means (CH2), in particular a chip card.

10. Device according to any of claims 1 to 9, **characterised in that** old image modification values (AEW1, ..., AEWn) for the digital camera can be stored in a further memory (SP3), which values were generated earlier on the basis of the evaluation of image data, and the generating means (ER) is configured in such a way that the image modification values (NEW) can also be generated as a function of the old image modification values (AEW1, ..., AEWn).

11. Device according to claim 10, **characterised in that** the generating means (ER) is configured in such a way that the old image modification values (AEW1, ..., AEWn) for the digital camera can be weighted to various degrees as a function of the time of their generation, so the old image modification values (AEW1, ..., AEWn) with increasing age are taken into account to a lesser degree when generating the image modification values (NEW).

12. Device according to any of claims 1 to 9, **characterised in that** the generating means (ER) is configured in such a way that a correction value can be generated in which old image modification values for the digital camera, which were generated earlier on the basis of the evaluation of image data, are linked to one another and the image modification values (NEW) can also be generated by means of this correction value.

13. Method for generating image modification values (NEW) for copying a picture taken with a digital camera onto copying material to take into account different characteristics of digital cameras and the components thereof, wherein the method comprises the following steps:
- storing digital image data of a plurality of pictures taken by the digital camera, which data *inter alia* represents individual properties and/or sensitivities of the digital camera and the components thereof,
- evaluating the image data of the plurality of pictures with the aid of characteristic criteria of the image data and
- generating the image modification values (NEW) as a function of the evaluation of the image data of the plurality of pictures.

## Revendications

1. Dispositif (PR ; DK ; CH2) servant à produire des valeurs de modification d'image (NEW) en vue du tirage, sur un support de tirage, d'une image prise avec un appareil photographique numérique, lequel dispositif prend en considération les diverses caractéristiques d'appareils photographiques numériques et de leurs composants et comporte :
- un moyen de mémorisation (SP1 ; LS) servant à mémoriser des données d'image numériques de différentes images prises par l'appareil photographique numérique qui chacune représente, entre autres, les propriétés et/ou sensibilités individuelles de l'appareil photographique numérique et de ses composants ;
- un moyen d'analyse (AW) servant à analyser les données d'image des différentes images au moyen de critères caractéristiques des données d'images; et
- un moyen de production (ER) servant à produire les valeurs de modification d'image (NEW) en fonction de l'analyse des données d'image des différentes images.

2. Dispositif selon la revendication 1, **caractérisé en ce que** le moyen d'analyse (AW) est agencé de telle sorte que ce dernier analyse les données d'image de toutes les images qui sont mémorisées dans le moyen de mémorisation (SP1 ; LS) et qui ont été prises par l'appareil photographique numérique.

3. Dispositif selon la revendication 1 ou 2, **caractérisé en ce que** les données d'image de l'une des images prises par l'appareil photographique numérique sont réunies en un ensemble de données (DS1, ..., DSn), et **en ce que** le dispositif comporte un moyen de commande (CR) servant à ajouter les valeurs de modification d'image produites (NEW) à l'ensemble de données (DS1, ..., DSn).

4. Dispositif selon l'une des revendications 1 à 3, **caractérisé en ce que** ledit dispositif est un dispositif (PR) servant à tirer des images sur un support de tirage.

5. Dispositif selon la revendication 4, **caractérisé en ce que** ledit dispositif comporte en outre :
- un moyen de reconnaissance (EP, CR) servant à reconnaître le type (KT1, ..., KTn) de l'appareil photographique numérique qui a pris l'image à tirer ;
- une mémoire (SP2) servant à mémoriser les ensembles de données de base (GD1, ..., GDn) comportant des paramètres de base destinés au tirage des images, des types (KT1, ..., KTn) d'appareils photographiques numériques étant associés aux ensembles de données de base (GD1, ..., GDn) ; et
- un moyen de sélection (CR) servant à sélectionner un ensemble de données de base mémorisé (GD1, ..., GDn) en fonction du type reconnu (KT1, ..., KTn) de l'appareil photographique numérique ; et
- le moyen de production (ER) est agencé de telle sorte que les valeurs de modification d'image (NEW) peuvent également être produites au moyen des paramètres de base de l'ensemble de données de base sélectionné (GD1, ..., GDn).

6. Dispositif selon la revendication 5, **caractérisé en ce que** le moyen de reconnaissance (EP, CR) est agencé de telle sorte qu'une information comportant l'indication du type (KT1, ..., KTn) de l'appareil photographique numérique peut être saisie.

7. Dispositif selon la revendication 5 ou 6, **caractérisé en ce que** le moyen de reconnaissance (EP, CR) est agencé de telle sorte que les données d'image d'au moins l'une des images prises peuvent être analysées.

8. Dispositif selon l'une des revendications 1 à 3, **caractérisé en ce que** ledit dispositif est un appareil photographique numérique (DK).

9. Dispositif selon l'une des revendications 1 à 3, **caractérisé en ce que** ledit dispositif est un moyen formant mémoire (CH2), notamment une carte à puce.

10. Dispositif selon l'une des revendications 1 à 9, **caractérisé en ce qu'**il est possible de mémoriser dans une mémoire supplémentaire (SP3) d'anciennes valeurs de modification d'image (AEW1, ..., AEWn) de l'appareil photographique numérique qui ont été produites auparavant du fait de l'analyse de données d'image, et **en ce que** le moyen de production (ER) est agencé de telle sorte que les valeurs de modification d'image (NEW) peuvent également être produites en fonction des anciennes valeurs de modification d'image (AEW1, ..., AEWn).

11. Dispositif selon la revendication 10, **caractérisé en ce que** le moyen de production (ER) est agencé de telle sorte que les anciennes valeurs de modification d'image (AEW1, ..., AEWn) de l'appareil photographique numérique peuvent être pondérées à des degrés différents en fonction du moment de leur production de manière que le degré de prise en considération des anciennes valeurs de modification d'image (AEW1, ..., AEWn) diminue en fonction de l'ancienneté de ces dernières lors de la production des valeurs de modification d'image (NEW).

12. Dispositif selon l'une des revendications 1 à 9, **caractérisé en ce que** le moyen de production (ER) est agencé de telle sorte qu'il est possible de produire une valeur de correction dans laquelle des anciennes valeurs de modification d'image de l'appareil photographique numérique qui ont été produites auparavant du fait de l'analyse de données d'image sont liées ensemble, et **en ce que** les valeurs de modification d'image (NEW) peuvent également être produites au moyen de cette valeur de correction.

13. Procédé servant à produire des valeurs de modification d'image (NEW) en vue du tirage, sur un support de tirage, d'une image prise avec un appareil photographique numérique, lequel dispositif prend en considération les diverses caractéristiques d'appareils photographiques numériques et de leurs composants, ce procédé comportant les étapes suivantes :
- mémorisation de données d'image numériques de plusieurs images prises par l'appareil photographique numérique, qui chacune représente, entre autres, les propriétés et/ou sensibilités individuelles de l'appareil photographique numérique et de ses composants ;
- analyse des données d'image des différentes images au moyen de critères caractéristiques des données d'images ; et
- production des valeurs de modification d'image (NEW) en fonction de l'analyse des données d'image des différentes images.
